# EUROPÄISCHE PATENTSCHRIFT

(11) **EP 1 208 022 B1**
(45) Veröffentlichungstag und Bekanntmachung des Hinweises auf die Patenterteilung: **05.03.2003**
(21) Anmeldenummer: 00964065.7
(22) Anmeldetag: 30.08.2000
(51) Int. Cl.: B60R 21/28, B60R 21/01

(54) **VORRICHTUNG ZUM GESTEUERTEN ENTLÜFTEN EINES GASSACKS**
DEVICE FOR CONTROLLED DEFLATION OF A GAS BAG
DISPOSITIF PERMETTANT LE DEGONFLAGE COMMANDE D'UN SAC DE GAZ

(30) Priorität: 31.08.1999 LU 90431
(43) Veröffentlichungstag der Anmeldung: 29.05.2002
(73) Patentinhaber: IEE INTERNATIONAL ELECTRONICS & ENGINEERING S.A., 6468 Echternach (LU); DaimlerChrysler AG, 70567 Stuttgart (DE)
(72) Erfinder: SERBAN, Bogdan, L-4610 Niederkorn (LU); HAUER, Ernst, Johann, L-6586 Steinheim (LU); WITTE, Michel, L-1420 Luxembourg (LU); PETRI, Volker, 71134 Aidlingen (DE); RUDOLF, Harald, D-72072 Tübingen (DE); MEYER, Michael, 71155 Alfdorf (DE)
(74) Vertreter: Beissel, Jean
(86) Internationale Anmeldenummer: EP0008460
(87) Internationale Veröffentlichungsnummer: WO01015942

(56) Entgegenhaltungen:
- EP-A- 0 836 971
- GB-A- 2 306 409
- YANIGER S I: "FORCE SENSING RESISTORSTM: A REVIEW OF THE TECHNOLOGY" ELECTRO INTERNATIONAL CONFERENCE RECORD,US,WESTERN PERIODICALS CO, VENTURA, CA, Bd. 16, 16. April 1991 (1991-04-16), Seiten 666-668, XP000288444

## Beschreibung

### Einleitung

Die vorliegende Erfindung betrifft eine Vorrichtung zum Entlüften eines Luftsacks, insbesondere zum Entlüften eines Airbags in einem aktiven Passagierrückhaltesystem eines Fahrzeugs.

Um bei einem Verkehrsunfall die Verletzungsrisiken für die Fahrzeuginsassen zu senken, werden moderne Fahrzeuge immer häufiger mit einem aktiven Passagierrückhaltesystem ausgestattet. Ein solches aktives Passagierrückhaltesystem umfaßt im allgemeinen einen oder mehrere Airbags, die bei einem Aufprall des Fahrzeugs blitzschnell aufgeblasen werden und die von dem Passagier bei dem Aufprall freigegebene Energie aufnehmen.

Da ein Airbag wie z.B. ein Frontalairbag mit sehr hohen Geschwindigkeiten (200 bis 300 km/h) aus dem Armaturenbrett bzw. dem Pralltopf des Lenkrades austritt, ist es zur Vermeidung von Verletzungen des Passagiers durch den auslösenden Airbag vorteilhaft, das vollständige Aufblasen oder Entfalten des Airbags zu unterbrechen oder zu steuern, sobald der Passagier ausreichend weit in den Airbag eingetaucht und ein ausreichender Druck in dem Airbag aufgebaut ist, um die Energie des Passagiers sicher aufnehmen zu können. Da der Zeitpunkt an dem der Passagier ausreichend in den Airbag eingetaucht ist, sehr stark von der Sitzposition des Passagiers zum Zeitpunkt des Unfalls abhängt, kann das Unterbrechen des Aufblasvorgangs des Airbags in jedem Stadium seines Auslösevorgangs notwendig werden.

Da eine auf pyrotechnischer Basis funktionierende Aufblasvorrichtung, ein sogenannter Inflator, systembedingt nicht zu jedem beliebigen Zeitpunkt in seiner Funktion unterbrochen werden kann, muß ein Passagierrückhaltesystem zum gesteuerten Abbrechen des Auslösevogangs eines Airbags infolgedessen eine Vorrichtung zum gezielten Entlüften des Airbags aufweisen. Eine solche Vorrichtung muß es erlauben, das durch den Inflator in den Airbagsack eingeblasene Gas zu jedem beliebigen Zeitpunkt abzulassen um ein weiteres Aufblasen des Airbags zu verhindern.

Aus der WO-A-98/01323 ist eine Vorrichtung bekannt, bei der der Gassack eine Entlüftungsöffnung aufweist, die an einer Sollbruchlinie verschlossen ist. Die Sollbruchlinie ist derart ausgelegt, daß sie unterhalb eines vorherbestimmten Solldrucks innerhalb des Airbags intakt bleibt und oberhalb des Solldrucks unter dem Einfluß des Drucks automatisch aufbricht. Eine solche Sollbruchlinie wird im allgemeinen durch eine sorgfältig, technisch genau dimensionierte Schwächung des verwendeten Materials erreicht. Diese Schwächung des Materials kann z.B. durch eine Perforation erfolgen, bei der kleine Einschnitte entlang der vorgesehenen Sollbruchlinie angebracht werden. In einer anderen Ausgestaltung wird die Sollbruchlinie beim Verschließen des Airbags mittels einer durch Nähen hergestellten Naht erzeugt, wobei der zum Nähen verwendete Faden und der Stichabstand genau auf die Anforderungen der Airbag-Auslösung abgestimmt ist. Alternativ kann die Airbaghülle auch durch Schweißen, z.B. durch Ultraschallschweißen, mit genau angepaßten Schweißmustern verschlossen werden. In diesem Fall ist die Schweißnaht die Sollbruchlinie.

Das Problem bei solchen unter dem Airbagdruck automatisch aufbrechenden Sollbruchlinien liegt darin, daß aufgrund von Herstellungstoleranzen ein genaues Einstellen des geforderten Solldrucks an dem die Sollbruchlinie aufbricht schwer möglich ist.

### Aufgabe der Erfindung

Aufgabe der vorliegenden Erfindung ist es folglich, eine andere Vorrichtung zum gezielten Entlüften eines Gassacks vorzuschlagen.

### Allgemeine Beschreibung der Erfindung

Diese Aufgabe wird erfindungsgemäß gelöst durch eine Vorrichtung zum Entlüften eines Gassacks, insbesondere eines Airbags, wobei der Gassack mindestens eine Entlüftungsöffnung aufweist, die an einer aufbrechbaren Sollbruchlinie verschlossen ist, und wobei die Sollbruchlinie ein Verschlußelement aufweist, das durch Schmelzen oder Sublimieren des Verschlußelementes aufbrechbar ist.

Im Gegensatz zu den bisher bekannten Vorrichtungen, wird die erfindungsgemäße Vorrichtung aktiv durch Schmelzen oder Verbrennen des Verschlußelementes ausgelöst und die Sollbruchlinie aufgebrochen. Dies bedeutet, daß das Aufbrechen der Sollbruchlinie zu jedem beliebigen Zeitpunkt exakt gesteuert erfolgen kann. Die Auslösung der Entlüftungsvorrichtung kann beispielsweise durch ein Airbagsteuermodul erfolgen, nachdem eine Sensoreinrichtung ein für die Aufnahme der freigesetzten Energie ausreichendes Aufblasvolumen des Airbags detektiert hat.

Ein weiterer Vorteil der erfindungsgemäßen Vorrichtung liegt in der Trennung der Auslösefunktion (Schmelzen oder Verbrennen des Verschlußelementes) und der Aufbrechfunktion der Sollbruchlinie. Die Sollbruchlinie kann demnach auf ein schnelles Aufbrechen ohne Kraftaufwand hin optimiert werden, ohne daß die mechanische Festigkeit der Sollbruchlinie im verschlossenen Zustand der Entlüftungsöffnung zu stark beeinträchtigt wird. In der Tat muß einerseits die Sollbruchlinie beim Auslösung der Vorrichtung leicht und ohne Kraftaufwand aufbrechen, um die Entlüftungsöffnung des Airbags innerhalb kürzester Zeit freizugeben. Andererseits muß der gefaltete Airbag sicher verschlossen sein, um ein Aufblasen im Falle eines Aufpralls zu gewährleisten. Insbesondere bei der Fertigung der Airbags und dem Einbau in das Fahrzeug, muß der Airbag den dabei auftretenden Verformungen und Belastungen gerecht werden, ohne dabei Schaden zu nehmen, der seine ordnungsgemäße Funktion über die geforderte Lebensdauer verringert könnte. Die Trennung der verschiedenen Funktionen bei der erfindungsgemäßen Vorrichtung erlaubt es diesen widersprüchlichen Ansprüchen an das System Rechnung zu tragen.

In einer ersten vorteilhaften Ausgestaltung umfaßt die Sollbruchlinie eine durch eine geeignete Herstellungstechnik in dem Material des Gassacks hergestellte Verschlußnaht und das Verschlußelement weist eine durch die Herstellungstechnik bestimmte Nahtfaser aus dem Material des Gassacks auf. Bei dieser Ausgestaltung ist der Nahtfaser vorzugsweise ein elektrisches Heizelement, insbesondere eine elektrisch leitende Heizfaser, zugeordnet, das die Nahtfaser beim Durchleiten eines elektrischen Stromes an mindestens einer Stelle bis zu einer Temperatur oberhalb der Schmelztemperatur des Materials des Gassacks aufheizt. Sobald die Nahtfaser an mindestens einer Stelle durchbrochen ist, kann die Verschlußnaht bei geeigneter Ausgestaltung durch spezielle Web- bzw. Wirktechniken ohne Kraftaufwand geöffnet und so die Entlüftungsöffnung freigegeben werden.

In einer zweiten vorteilhaften Ausgestaltung weist die Sollbruchlinie eine Verschlußnaht und das Verschlußelement eine Nahtfaser aus elektrisch leitendem Material auf. Das Schmelzen oder Sublimieren des Verschlußelementes kann bei dieser Ausgestaltung direkt durch Durchleiten eines elektrischen Stromes durch das Verschlußelement erfolgen.

In einer weiteren vorteilhaften Ausgestaltung umfaßt die Sollbruchlinie eine erste und eine zweite Reihe von Verschlußgliedern, wobei die Verschlußglieder der ersten Reihe an einem ersten Rand der Entlüftungsöffnung des Gassacks angeordnet sind und die Verschlußglieder der zweiten Reihe derart an einem zweiten Rand der Entlüftungsöffnung des Gassacks angeordnet sind, daß die Verschlußglieder der ersten Reihe und die Verschlußglieder der zweiten Reihe in Richtung der Sollbruchlinie gegeneinander versetzt sind, und wobei die Verschlußglieder der ersten Reihe und die Verschlußglieder der zweiten Reihe im verschlossenen Zustand des Gassacks formschlüssig ineinandergreifen, wie das z.B. bei einem Reißverschluß realisiert ist. Die Sollbruchlinie kann beispielsweise als schieberloser Reißverschluß ausgebildet sein, d.h. als Reißverschluß, bei dem das Verschlußelement zur Herstellung des Formschlusses, der sogenannte Schieber oder Gleiter, entfernt ist, wobei der Reißverschluß in die Entlüftungsöffnung des Gassacks eingearbeitet ist. Das Verschlußelement weist in diesem Fall vorzugsweise eine elektrisch leitende Faser auf, die die erste und zweite Reihe von Verschlußgliedern an mindestens einer Stelle zusammenhält.

Es ist anzumerken, daß der Airbag aus einem geeigneten Textilmaterial hergestellt wird, in den der Reißverschluß mit seinen seitlichen Textilbändern eingearbeitet werden kann. Das Einarbeiten des Reißverschlußelementes als Verschluß in der Entlüftungsöffnung des Airbags kann dabei beispielsweise durch Nähen, Ultraschallschweißen oder andere Befestigungstechniken erfolgen.

Ein Reißverschluß bietet quer zur Öffnungsrichtung durch den formschlüssigen Verbund der Verschlußglieder eine erhebliche Festigkeit, so daß ein solcher Airbag den hohen Anforderungen an die Handhabung während des Einbaus des Airbag-Systems in das Fahrzeug genügt und Beschädigungen des Einbauteils weitgehend ausgeschlossen werden können.

In seiner longitudinalen Öffnungsrichtung kann ein Reißverschluß bei seiner normalen Verwendung jedoch leicht durch den sogenannten Schieber oder Gleiter geöffnet werden und bleibt bei geringer Belastung nur bis zu dem Punkt offen, der durch den Gleiter geöffnet wurde. Entfernt man den Gleiter nach dem Verschließen, läßt sich der Reißverschluß, wenn er an einer Stelle offen ist, schon durch geringsten Kraftaufwand durch Auftrennen der formschlüssigen Verbindung der Verschlußglieder, ungehindert über die ganze Länge öffnen, sobald die beiden Enden auseinander gezogen werden. Durch den beschriebenen Öffnungsmechanismus gelingt die Auftrennung des Formschlusses der Verschlußglieder leicht und es ist ein sicheres Öffnen der Entlüftungsöffnung entlang der Sollbruchlinie gewährleistet. Da nur der Formschluß der Verschlußglieder aufgehoben werden muß, wird hierbei sehr wenig Energie verbraucht und die Öffnungsgeschwindigkeit ist den Anforderungen des Systems entsprechend hoch.

Mindestens eine der Reihen von Verschlußgliedern weist vorzugsweise eine Lücke auf, derart daß die bei verschlossenem Zustand des Gassacks durch die ineinandergreifenden Verschlußglieder gebildete Kette an einer Stelle durchbrochen ist und eine Öffnung aufweist. Die Öffnungsstelle der Verschlußglieder kann auch dadurch gebildet werden, daß die Verschlußglieder der ersten Reihe und die Verschlußglieder der zweiten Reihe an einer Stelle nicht ineinander eingreifen. Dies können z.B. die Anfangsglieder der jeweiligen Reihen sein, die nicht miteinander verbunden sind. Es ist anzumerken, daß Kette in diesem Zusammenhang in seiner Bedeutung als *"ununterbrochene Reihe von Gleichartigern"* verwendet wird. Durch die Öffnung in den formschlüssig verbundenen Verschlußelementen wird erreicht, daß der Reißverschluß sich durch die Belastung des sich öffnenden Airbags, nach dem Schmelzen des Verschlußelementes, mit geringem Kraftaufwand öffnet. Durch diesen Vorschlag wird eine normalerweise unerwünschte Eigenschaft des Reißverschlusses ausgenutzt, daß er schon beim Fehlen eines einzelnen oder weniger der formschlüssigen Verschlußelemente versagt und sich dabei ohne Kraftaufwand öffnet.

In beiden Fällen hält die elektrisch leitende Faser die erste und zweite Reihe von Verschlußgliedern vorzugsweise im Bereich dieser Öffnung zusammen. Dies kann beispielsweise dadurch erfolgen, daß das Verschlußelement die erste und zweite Reihe von Verschlußgliedern umschließt, und somit im normalen Zustand verhindert, daß die beiden Reihen von Verschlußglieder durch den im Gassack herrschenden Druck auseinandergezogen werden und der Formschluß zwischen den Verschlußgliedern aufgehoben wird. Alternativ und insbesondere bei einer Ausgestaltung bei der zumindest einige der Verschlußglieder der ersten und zweiten Reihe derart schlaufenförmig ausgebildet sind, daß die bei verschlossenem Zustand des Gassacks durch die ineinandergreifenden Verschlußglieder gebildete Kette an einer Stelle einen im Inneren der schlaufenförmigen Verschlußglieder in Richtung der Sollbruchlinie verlaufenden Längskanal aufweist, ist das Verschlußelement in den Längskanal eingelegt, und verhindert somit ein Aufreißen des Formschlusses zwischen den beiden Reihen von Verschlußgliedern.

Es ist anzumerken, daß sich die oben beschriebene Vorrichtung zum Entlüften eines Gassacks besonders zum Einsatz in einem sogenannten "intelligenten" Passagierrückhaltesystem für ein Fahrzeug eignet. Ein solches Passagierrückhaltesystem umfaßt neben der Entlüftungsvorrichtung mindestens einen Airbag mit einer Steuervorrichtung, und eine Sensoreinrichtung zum Detektieren der relativen Position des Passagiers bezüglich des Airbags. Hierbei steuert die Steuervorrichtung die Vorrichtung zum Entlüften des Gassacks anhand eines von der Sensoreinrichtung ermittelten Positionssignals bei einer bestimmten Position des Passagiers bezüglich des Airbags an und löst diese aus. Die Steuervorrichtung wertet hierzu das Positionssignal der Sensoreinrichtung beispielsweise nach Druck und/oder Zeit aus, d.h. nach dem Innendruck des Airbags, bzw. dem Druck den der Airbag auf den Passagier ausübt und/oder der Zeit, während der dieser Druck auf den Passagier einwirkt.

In einer vorteilhaften Ausgestaltung weist die Sensoreinrichtung mindestens einen Sensor auf, der auf dem Airbag in einem Bereich angeordnet ist, der beim Auslösen des Airbags dem Passagier zugewandt ist. Bei dem Sensor kann es sich beispielsweise um einen auf dem Airbag angeordneten Kraftsensor handeln, der den von dem Airbag auf den Passagier ausgeübten Druck aufnimmt und in ein entsprechendes elektrisches Signal umwandelt. Ein solcher Kraftsensor umfaßt vorteilhaft mindestens zwei Elektrodenstrukuren, die in einem gewissen Abstand zueinander auf einem textilen Trägermaterial aufgebracht sind, und eine Schicht aus einem Halbleitermaterial, die in einem aktiven Bereich des Sensors in unmittelbarem Kontakt zu den Elektrodenstrukturen über den Elektrodenstrukturen aufgebracht ist, wobei die Schicht aus Halbleitermaterial einen inneren Widerstand aufweist, der in Abhängigkeit einer Verformung der Schicht veränderlich ist. Das textile Trägermaterial kann ein beliebiges weiches Textilmaterial umfassen. In einer besonders vorteilhaften weil einfachen Variante umfaßt das Textilmaterial das eigentliche Airbagmaterial, wobei die Elektrodenstrukturen direkt auf den Airbag aufgebracht sind.

Ein derartiger Sensor kommt ohne steife Trägerschichten aus, wie sie beispielsweise bei den gängigen Foliendrucksensoren üblich sind. Hierdurch weist der Sensor eine sehr hohe Verformbarkeit auf, so daß der Sensor ohne weiteres mit dem Airbag zusammen gefaltet werden kann. Darüber hinaus wird ein Verletzungsrisiko des Passagiers durch den Sensor aufgrund der Weichheit des Sensors weitgehend ausgeschlossen.

Es ist anzumerken, daß anstatt des Kraftsensors auch ein kapazitiver Abstandssensor mit mindestens einer auf dem Airbag angeordneten Elektrodenstruktur oder ein induktiver Abstandssensor mit mindestens einer auf dem Airbag angeordneten und mit einer Wechselspannung beaufschlagten induktiven Spule verwendet werden kann.

### Beschreibung anhand der Figuren

Im folgenden werden nun verschiedene Ausgestaltungen der Erfindung anhand der beiliegenden Figuren beschrieben. Es zeigen:
- Fig.1:: eine Ausgestaltung mit einer schmelzbaren Naht als Verschlußelement
- Fig.2:: eine Ausgestaltung mit Reißverschluß und Schmelzdraht
- Fig.3:: einen Ausschnitt aus Fig. 2 mit einer möglichen Anordnung des Verschlußelementes
- Fig.4:: eine alternative Möglichkeit der Anordnung des Verschlußelementes.

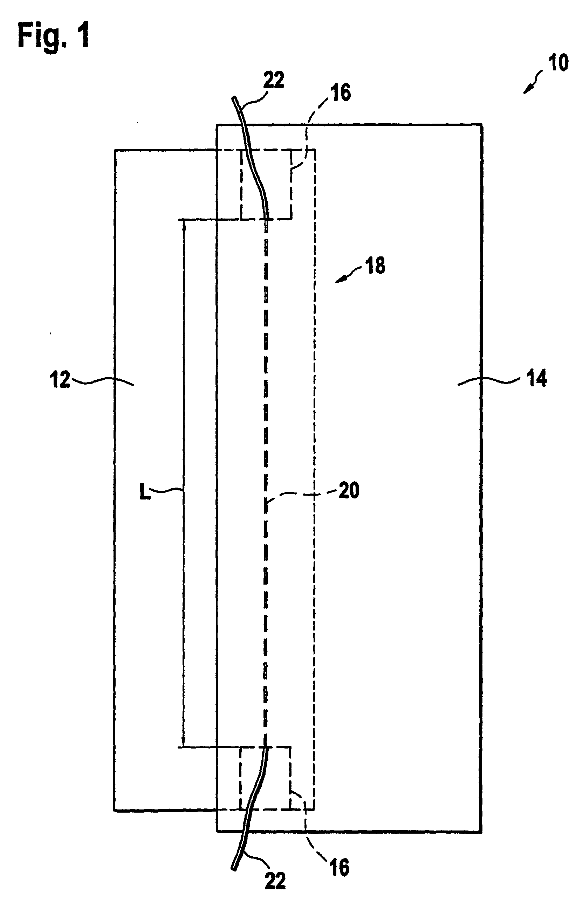

In Fig.1 ist eine erste Ausgestaltung der vorliegenden Erfindung dargestellt. Fig. 1 zeigt hierzu einen Ausschnitt aus einem Airbagsack 10, und zwar in dem Bereich, in dem zwei Teilstücke 12 und 14 des Airbags zusammengenäht sind. Die beiden Teilstücke 12 und 14 überlappen sich in dem gezeigten Bereich und sind üblicherweise durch eine einfache oder mehrreihige Naht 16 miteinander vernäht.

Zum Erzeugen einer geeigneten Entlüftungsöffnung 18, ist die normale Naht 16 bei der vorliegenden Ausgestaltung auf einer bestimmten Länge L unterbrochen. Die Länge L der Unterbrechung der Naht 16 entspricht dabei der gewünschten Länge der Entlüftungsöffnung.

Um den Airbag zu verschließen, sind die beiden Teilstücke 12 und 14 des Airbags anschließend im Bereich der Unterbrechung der normalen Naht 16 mittels eines schmelz- oder sublimierbaren Nähfadens 20 miteinander vernäht. Der schmelzbare Nähfaden 20 kann beispielsweise einen Metallfaden umfassen, der an seinen beiden Enden jeweils mit einer Stromzuleitung 22 verbunden ist. Beim Durchleiten eines geeigneten elektrischen Stromes durch den Metallfaden 20 wird dieser bis zu einer Temperatur oberhalb seiner Schmelztemperatur aufgeheizt, so daß die schmelzbare Naht aufreißt. Sobald der Nähfaden 20 an mindestens einer Stelle durchbrochen ist, kann die Verschlußnaht bei geeigneter Ausgestaltung durch spezielle Web- bzw. Wirktechniken ohne Kraftaufwand geöffnet und so die Entlüftungsöffnung 18 freigegeben werden.

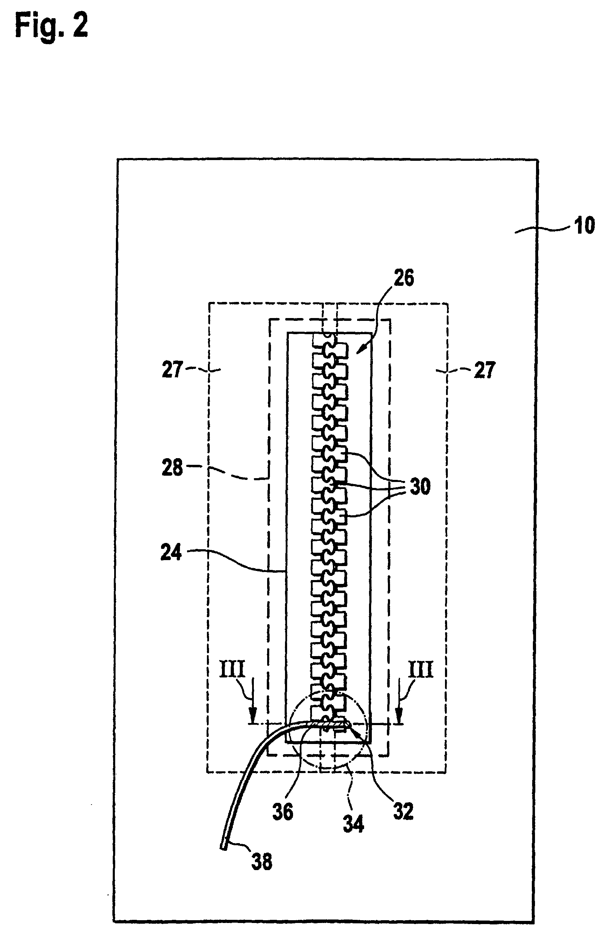

Eine andere Ausgestaltung einer Vorrichtung zur Entlüftung eines Gassacks ist in Fig. 2 dargestellt. Der hier gezeigte Ausschnitt aus dem Airbagsack 10 weist eine Öffnung 24 auf, in der ein passender Reißverschluß 26 angebracht ist. Der Reißverschluß ist dabei vorzugsweise an seinen seitlichen Textilbändern 27 mittels einer umlaufenden Naht 28 im Inneren des Airbags in das Airbagmaterial eingearbeitet.

Ein Reißverschluß bietet quer zur Öffnungsrichtung durch den formschlüssigen Verbund seiner Verschlußglieder 30 eine erhebliche Festigkeit, so daß ein mit einem solchen Reißverschluß ausgestatteter Airbag den hohen Anforderungen an die Handhabung während des Einbaus des Airbag-Systems in das Fahrzeug genügt und Beschädigungen des Einbauteils weitgehend ausgeschlossen werden können.

Der Reißverschluß 26 ist vorzugsweise als schieberloser Reißverschluß ausgebildet, d.h. als Reißverschluß, bei dem das Verschlußelement zur Herstellung des Formschlusses zwischen den Verschlußglieder 30, der sogenannte Schieber oder Gleiter, entfernt ist. Ein solcher Reißverschluß läßt sich, wenn er an einer Stelle offen ist, schon durch geringsten Kraftaufwand ungehindert über die ganze Länge öffnen, sobald die beiden Enden auseinander gezogen werden.

Damit der Reißverschluß 26 nicht unbeabsichtigt öffnet, ist dem Reißverschluß mindestens ein schmelz- oder sublimierbares Verschlußelement 32 zugeordnet, das die beiden ineinandergreifenden Reihen von Verschlußgliedern 30 beispielsweise in mindestens einem der Endbereiche 34 des Reißverschlusses 26 zusammenhält. An dem gegenüberliegenden Endbereich können die beiden Reihen von Verschlußglieder durch ein geeignetes Vernähen des Endbereichs mit dem Airbagmaterial zusammengehalten werden oder durch ein beliebiges Endglied (nicht dargestellt), das die beiden Zahnreihen umgreift. Alternativ kann auch an diesem Ende des Reißverschlusses eine schmelz- oder sublimierbares Verschlußelement angebracht sein. Unabhängig von der Ausführung ist auf diese Art der Formschluß der beiden Zahnreihen des Reißverschlusses in Normalfall gegen Auftrennung gesichert. Soll die Entlüftungsöffnung freigegeben werden wird das Verschlußelement durch Schmelzen oder Sublimieren zerstört und die Sicherung gegen Auftrennen des Formschlusses aufgehoben.

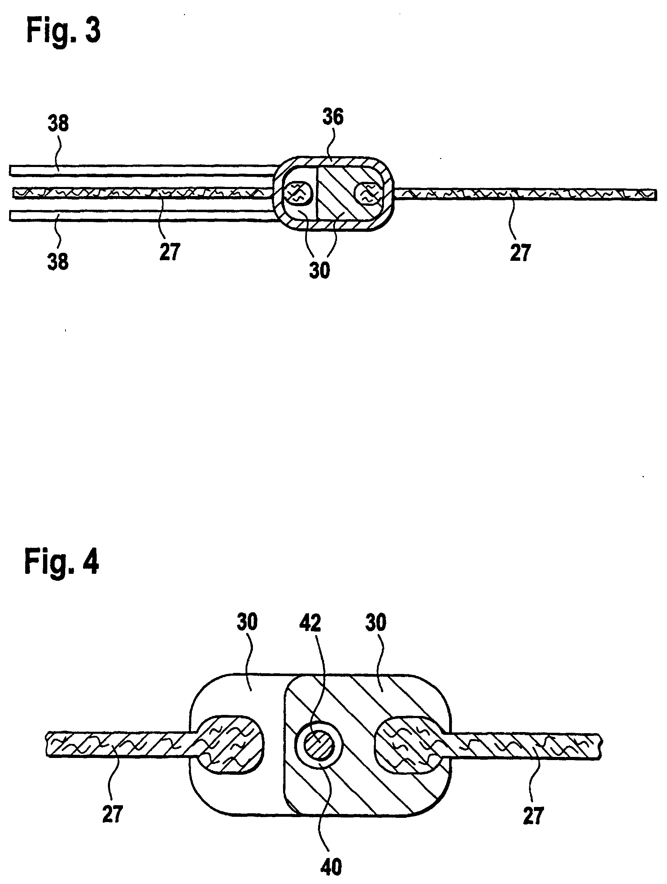

Bei dem in Fig. 2 dargestellten schmelzbaren Verschlußglied 32 handelt es sich beispielsweise um einen Schmelzdraht 36, der um die beiden Reihen von Verschlußglieder 30 herumschlugen ist und diese so in ihrer relativen Lage zueinander fixiert (siehe auch Fig. 3). Der Schmelzdraht ist dabei beispielsweise durch die beiden Textilbänder 27 des Reißverschlusses hindurchgeführt, so daß er lediglich die eigentlichen Verschlußglieder 30 umschließt. Hierdurch wird ein sicherer Halt der formschlüssigen Verbindung erreicht.

Über zwei elektrische Zuleitungen 38 ist der Schmelzdraht mit einer Stromquelle verbunden, die den Schmelzdraht, von der Airbagsteuerung gesteuert, mit einem geeigneten Strom beaufschlagt, falls der Airbag zur Vermeidung von Verletzungen des Passagiers in seinem Aufblasvorgang gestoppt werden muß. Der durchfließende Strom heizt den Schmelzdraht auf eine Temperatur oberhalb seiner Schmelz- bzw. Sublimiertemperatur auf, so daß die durch den Schmezdraht geschaffene Verbindung der beiden Verschlußgliederreihen aufbricht. Durch den in dem Airbag zu diesem Zeitpunkt herrschenden Druck werden die beiden Verschlußgliederreihen an den nun freien Enden auseinandergezogen und der Reißverschluß öffnet wie oben beschrieben ohne wesentlichen Kraftaufwand.

Eine alternative Ausgestaltung des Verschlußelementes 32 ist in Fig. 4 dargestellt. Diese Ausgestaltung ist beispielsweise in Verbindung mit einem Reißverschluß mit schlaufenförmig ausgebildeten Verschlußgliedern 30 einsetzbar. Bei derartigen Reißverschlüssen bildet sich im Inneren der durch die ineinandergreifenden Verschlußglieder 30 gebildeten Kette ein Längskanal 40 aus, in den ein Schmelzdraht 42 einlegbar ist. Der Schmelzdraht kann dabei je nach Ausgestaltung durch sämtliche oder lediglich durch einige der Verschlußglieder hindurchgeführt werden. In dem ersten Fall schließen sich die elektrischen Zuleitungen an den beiden Enden des Reißverschlusses an den Schmelzdraht an. Im zweiten Fall, in dem der Schmelzdraht beispielsweise lediglich durch zwei nebeneinanderliegende Verschlußglieder durchgeführt wird, wird der Schmelzdraht vorzugsweise zwischen den Verschlußgliedern aus der gebildeten Kette der Verschlußglieder herausgeführt und an diesen Stellen mit den elektrischen Zuleitungen kontaktiert.

Es ist anzumerken, daß das Verschlußelement 32 nicht in einem der Endbereiche des Reißverschlusses 26 angeordnet sein muß. In einer alternativen (nicht dargestellten) Ausgestaltung, kann der Reißverschluß 26 an jeder beliebigen Stelle eine Öffnung in den ineinandergreifenden Zahnreihen aufweisen, die dann durch das Verschlußelement 32 gegen Auftrennung gesichert wird. Eine solche Öffnung kann beispielsweise durch Heraustrennen eines der Verschlußglieder 30 in einer der beiden Reihen hergestellt werden.

## Patentansprüche

1. Vorrichtung zum Entlüften eines Gassacks, insbesondere eines Airbags, wobei der Gassack mindestens eine Entlüftungsöffnung (18) aufweist, die an einer aufbrechbaren Sollbruchlinie verschlossen ist, **dadurch gekennzeichnet, daß** die Sollbruchlinie ein Verschlußelement (20; 32) aufweist und daß die Sollbruchlinie durch Schmelzen oder Sublimieren des Verschlußelementes aufbrechbar ist.

2. Vorrichtung nach Anspruch 1, **dadurch gekennzeichnet, daß** die Sollbruchlinie eine durch eine geeignete Herstellungstechnik in dem Material des Gassacks hergestellte Verschlußnaht umfaßt und daß das Verschlußelement eine durch die Herstellungstechnik bestimmte Nahtfaser aus dem Material des Gassacks aufweist.

3. Vorrichtung nach Anspruch 2, **dadurch gekennzeichnet, daß** der Nahtfaser ein elektrisches Heizelement, insbesondere eine elektrisch leitende Heizfaser, zugeordnet ist, das die Nahtfaser beim Durchleiten eines elektrischen Stromes an mindestens einer Stelle bis zu einer Temperatur oberhalb der Schmelztemperatur des Materials des Gassacks aufheizt.

4. Vorrichtung nach Anspruch 1, **dadurch gekennzeichnet, daß** die Sollbruchlinie eine Verschlußnaht aufweist und daß das Verschlußelement eine Nahtfaser aus elektrisch leitendem Material aufweist.

5. Vorrichtung nach Anspruch 1, **dadurch gekennzeichnet, daß** die Sollbruchlinie eine erste und eine zweite Reihe von Verschlußgliedern umfaßt, wobei die Verschlußglieder der ersten Reihe an einem ersten Rand der Entlüftungsöffnung des Gassacks angeordnet sind und die Verschlußglieder der zweiten Reihe derart an einem zweiten Rand der Entlüftungsöffnung des Gassacks angeordnet sind, daß die Verschlußglieder der ersten Reihe und die Verschlußglieder der zweiten Reihe in Richtung der Sollbruchlinie gegeneinander versetzt sind, und wobei die Verschlußglieder der ersten Reihe und die Verschlußglieder der zweiten Reihe im verschlossenen Zustand des Gassacks formschlüssig ineinandergreifen, und daß das Verschlußelement eine elektrisch leitende Faser aufweist, die die erste und zweite Reihe von Verschlußgliedern an mindestens einer Stelle zusammenhält.

6. Vorrichtung nach Anspruch 5, **dadurch gekennzeichnet, daß** die Sollbruchlinie als schieberloser Reißverschluß ausgebildet ist, der in die Entlüftungsöffnung des Gassacks eingearbeitet ist.

7. Vorrichtung nach einem der Ansprüche 5 oder 6, **dadurch gekennzeichnet, daß** mindestens eine der Reihen von Verschlußgliedern eine Lücke aufweist, derart daß die bei verschlossenem Zustand des Gassacks durch die ineinandergreifenden Verschlußglieder gebildete Kette an einer Stelle durchbrochen ist und eine Öffnung aufweist, und daß die elektrisch leitende Faser die erste und zweite Reihe von Verschlußgliedern im Bereich dieser Öffnung zusammenhält.

8. Vorrichtung nach einem der Ansprüche 5 oder 6, **dadurch gekennzeichnet, daß** die Verschlußglieder der ersten Reihe und die Verschlußglieder der zweiten Reihe an einer Stelle nicht ineinander eingreifen, derart daß die bei verschlossenem Zustand des Gassacks durch die ineinandergreifenden Verschlußglieder gebildete Kette an dieser Stelle durchbrochen ist und eine Öffnung aufweist, und daß die elektrisch leitende Faser die erste und zweite Reihe von Verschlußgliedern im Bereich dieser Öffnung zusammenhält.

9. Vorrichtung nach einem der Ansprüche 5 bis 8, **dadurch gekennzeichnet, daß** das Verschlußelement die erste und zweite Reihe von Verschlußgliedern umschließt.

10. Vorrichtung nach einem der Ansprüche 5 bis 8, wobei zumindest einige der Verschlußglieder der ersten und zweiten Reihe derart schlaufenförmig ausgebildet sind, daß die bei verschlossenem Zustand des Gassacks durch die ineinandergreifenden Verschlußglieder gebildete Kette an einer Stelle einen im Inneren der schlaufenförmigen Verschlußglieder in Richtung der Sollbruchlinie verlaufenden Längskanal aufweist, und daß das Verschlußelement zumindest teilweise in den Längskanal eingelegt ist.

11. Vorrichtung nach einem der Ansprüche 5 bis 10, **dadurch gekennzeichnet, daß** das Schmelzen oder Sublimieren des Verschlußelementes durch Durchleiten eines elektrischen Stromes durch das Verschlußelement erfolgt.

12. Passagierrückhaltesystem für ein Fahrzeug, umfassend
mindestens einen Airbag mit einer Steuervorrichtung,
eine Sensoreinrichtung zum Detektieren der relativen Position des Passagiers bezüglich des Airbags, und
eine Vorrichtung zum Entlüften eines Gassacks nach einem der Ansprüche 1 bis 11,
wobei die Steuervorrichtung die Vorrichtung zum Entlüften des Gassacks anhand eines von der Sensoreinrichtung ermittelten Positionssignals bei einer bestimmten Position des Passagiers bezüglich des Airbags ansteuert.

13. Passagierrückhaltesystem nach Anspruch 12, **dadurch gekennzeichnet, daß** die Steuervorrichtung das Positionssignal der Sensoreinrichtung nach Druck und/oder Zeit auswertet.

14. Passagierrückhaltesystem nach Anspruch 12 oder 13, wobei die Sensoreinrichtung mindestens einen Sensor aufweist, der auf dem Airbag in einem Bereich angeordnet ist, der beim Auslösen des Airbags dem Passagier zugewandt ist.

15. Passagierrückhaltesystem nach Anspruch 14, wobei der Sensor ein auf dem Airbag angeordneter Kraftsensor ist.

16. Passagierrückhaltesystem nach Anspruch 15, **dadurch gekennzeichnet, daß** der Kraftsensor mindestens zwei Elektrodenstrukuren aufweist, die in einem gewissen Abstand zueinander auf einem textilen Trägermaterial aufgebracht sind und eine Schicht aus einem Halbleitermaterial, die in einem aktiven Bereich des Sensors in unmittelbarem Kontakt zu den Elektrodenstrukturen über den Elektrodenstrukturen aufgebracht ist, wobei die Schicht aus Halbleitermaterial einen inneren Widerstand aufweist, der in Abhängigkeit einer Verformung der Schicht veränderlich ist.

17. Passagierrückhaltesystem nach Anspruch 16, **dadurch gekennzeichnet, daß** das textile Trägermaterial das Airbagmaterial umfaßt, wobei die Elektrodenstrukturen direkt auf den Airbag aufgebracht sind.

## Claims

1. Device for deflating a gas bag, in particular an airbag, wherein the gas bag comprises at least one deflation opening (18) which is closed at a breakable, predetermined breaking line, **characterized in that** said predetermined breaking line comprises a closure element (20, 32) and that said breaking line is breakable by melting or sublimating said closure element.

2. Device according to claim 1, **characterized in that** said predetermined breaking line comprises a closure seam manufactured according to an appropriate manufacturing technique in the material of said gas bag and that said closure element comprises a seam fiber manufactured of said material of said gas bag and determined by said manufacturing technique.

3. Device according to claim 2, **characterized in that** an electrical heating element, in particular an electrically conductive heating fiber, is associated with said seam fiber, which heats said seam fiber to a temperature above the melting temperature of said material of said gas bag at at least one position when an electrical current is passed through said heating element.

4. Device according to claim 1, **characterized in that** said predetermined breaking line comprises a closure seam, and that said closure element comprises a seam fiber made from an electrically conductive material.

5. Device according to claim 1, **characterized in that** said predetermined breaking line comprises a first and second row of closure members, wherein said closure members of said first row are arranged on a first edge of said deflation opening of said gas bag, and said closure members of said second row are arranged in such a manner on a second edge of said deflation opening of said gas bag that said closure members of said first row and said closure members of said second row are offset relative to one another in the direction of said predetermined breaking line, and wherein said closure members of said first row and said closure members of said second row interlockingly engage in the closed condition of said gas bag and that said closure element comprises an electrically conductive fiber, which holds together said first and said second row of closure members at at least one position.

6. Device according to claim 5, **characterized in that** said predetermined breaking line is designed as a slide-less zip fastener, which is worked into said deflation opening of a gas bag.

7. Device according to any one of claims 5 or 6, **characterized in that** at least one of said rows of closure members comprises a gap in such a manner that the chain formed in said closed condition of said gas bag by said interlocking closure members is interrupted at one position and comprises an opening, and that said electrically conductive fiber holds together said first and second row of closure members in the region of this opening.

8. Device according to any one of claims 5 or 6, **characterized in that** said closure members of said first row and said closure members of said second row do not interlock at one position, in such a manner that the chain formed in said closed condition of said gas bag by said interlocking closure members is interrupted at this position and comprises an opening, and that said electrically conductive fiber holds together said first and second row of closure members in the region of this opening.

9. Device according to any one of claims 5 to 8, **characterized in that** said closure element encloses said first and second row of closure members.

10. Device according to any one of claims 5 to 8, wherein at least some of said closure members of said first and second row are designed in a loop shape in such a manner that the chain formed in said closed condition of said gas bag by said interlocking closure members comprises a longitudinal channel at one position in the interior of said loop-shaped closure members running in the direction of said predetermined breaking line, and that said closure element is inserted at least partially in said longitudinal channel.

11. Device according to any one of claims 5 to 10, **characterized in that** said melting or sublimation of said closure element is caused by an electrical current passing through said closure element.

12. Passenger safety system for a vehicle comprising
at least one airbag with a control device,
a sensor device for detecting the relative position of said passenger relative to said airbag, and
a device for deflating a gas bag according to any one of claims 1 to 11,
wherein said control device controls said device for deflating said gas bag on the basis of a position signal determined by said sensor device at a given position of said passenger relative to said airbag.

13. Passenger safety system according to claim 12, **characterized in that** said control device evaluates said position signal from said sensor device with reference to pressure and/or time.

14. Passenger safety system according to claim 12 or 13, wherein said sensor device comprises at least one sensor, which is arranged on said airbag in a region which is facing said passenger when said airbag is released.

15. Passenger safety system according to claim 14, wherein said sensor is a force sensor arranged on said airbag.

16. Passenger safety system according to claim 15, **characterized in that** said force sensor comprises at least two electrode structures, which are arranged at a given distance relative to one another on a textile carrier material and a layer made from a semiconductor material, which is arranged on said electrode structures in an active region of said sensor in direct contact with said electrode structures, wherein said layer of semiconductor material comprises an internal resistance, which varies in dependence upon the deformation of said layer.

17. Passenger safety system according to claim 16, **characterized in that** said textile carrier material comprises said airbag material, wherein said electrode structures are attached directly to said airbag.

## Revendications

1. Dispositif pour le dégonflage d'un sac à gaz, en particulier d'un airbag, le sac à gaz présentant au moins une ouverture de dégonflage (18) qui est fermée sur une ligne destinée à la rupture apte à se rompre, **caractérisé en ce que** la ligne destinée à la rupture présente un élément de fermeture (20; 32) et **en ce que** la ligne destinée à la rupture peut être rompue par fusion ou sublimation de l'élément de fermeture.

2. Dispositif selon la revendication 1, **caractérisé en ce que** la ligne destinée à la rupture comprend une couture de fermeture réalisée par une technique de fabrication appropriée dans le matériau du sac à gaz, et **en ce que** l'élément de fermeture représente une fibre, définie par la technique de fabrication, en le même matériau que le sac à gaz.

3. Dispositif selon la revendication 2, **caractérisé en ce qu'**un élément chauffant électrique, en particulier une fibre chauffante électriquement conductrice, est associé à la fibre de couture, de sorte que lorsqu'elle est traversée par un courant électrique, la fibre de couture s'échauffe en au moins un emplacement jusqu'à une température située au-dessus de la température de fusion du matériau du sac à gaz.

4. Dispositif selon la revendication 1, **caractérisé en ce que** la ligne destinée à la rupture comprend un cordon de fermeture et **en ce que** l'élément de fermeture présente un fil de couture en un matériau électriquement conducteur..

5. Dispositif selon la revendication 1, **caractérisé en ce que** la ligne destinée à la rupture comprend une première et une deuxième série d'organes de fermeture, les organes de fermeture de la première série étant disposés sur un premier bord de l'ouverture de dégonflage du sac à gaz et des éléments de fermeture de la deuxième série étant disposés sur un deuxième bord de l'ouverture de dégonflage du sac à gaz de telle sorte que les éléments de fermeture de la première série et les éléments de fermeture de la deuxième série soient décalés l'un par rapport à l'autre dans la direction de la ligne destinée à la rupture, les éléments de fermeture de la première série et les éléments de fermeture de la deuxième série s'engageant en correspondance géométrique l'un dans l'autre lorsque le sac à gaz est fermé, et **en ce que** l'élément de fermeture présente une fibre électriquement conductrice qui maintient la première et la deuxième série d'organes de fermeture ensemble en au moins un emplacement.

6. Dispositif selon la revendication 5, **caractérisé en ce que** la ligne destinée à la rupture est configurée comme fermeture à tirette sans coulisseau qui est incorporée dans l'ouverture de dégonflage du sac à gaz.

7. Dispositif selon l'une des revendications 5 ou 6, **caractérisé en ce qu'**au moins l'une des séries d'organes de fermeture présente un trou de telle sorte que la chaîne formée par les éléments de fermeture s'engageant les uns dans les autres lorsque le sac à gaz est fermé est interrompue en un endroit et présente une ouverture, et **en ce que** la fibre électriquement conductrice maintient ensemble la première et la deuxième série d'organes de fermeture dans la région de cette ouverture.

8. Dispositif selon l'un des revendications 5 ou 6, **caractérisé en ce qu'**en un emplacement, les organes de fermeture de la première série et les organes de fermeture de la deuxième série ne s'engagent pas les uns dans les autres, de telle sorte que lorsque le sac à gaz est fermé, la chaîne formée par les organes de fermeture engagés les uns dans les autres est interrompue en cet endroit et présente une ouverture, et **en ce que** dans la région de cette ouverture, la fibre électriquement conductrice maintient ensemble la première et la deuxième série d'organes de fermeture.

9. Dispositif selon l'une des revendications 5 à 8, **caractérisé en ce que** l'élément de fermeture entoure la première et la deuxième série d'organes de fermeture.

10. Dispositif selon l'une des revendications 5 à 8, dans lequel au moins certains des éléments de fermeture de la première et de la deuxième série sont configurés en forme de boucles de telle sorte que lorsque le sac à gaz est fermé, la chaîne formée par les organes de fermeture engagés les uns dans les autres présente en un endroit un canal longitudinal qui s'étend à l'intérieur des organes de fermeture en forme de boucles dans la direction de la ligne destinée à la rupture, et en ce que l'élément de fermeture est inséré au moins en partie dans le canal longitudinal.

11. Dispositif selon l'une des revendications 5 à 10, **caractérisé en ce que** la fusion ou la sublimation de l'élément de fermeture est obtenue par le passage d'un courant électrique dans l'élément de fermeture.

12. Système de retenue de passager pour un véhicule, comprenant:
au moins un airbag avec dispositif de commande,
un dispositif à capteur pour la détection de la position relative du passager par rapport à l'airbag, et
un dispositif pour dégonfler un sac à gaz selon l'une des revendications 1 à 11,
le dispositif de commande commandant le dispositif de dégonflage du sac à gaz à l'aide d'un signal de position détecté par le dispositif à capteur pour une position définie du passager par rapport à l'airbag.

13. Système de retenue de passager selon la revendication 12, **caractérisé en ce que** le dispositif de commande évalue le signal de position du dispositif à capteur en fonction de la pression et/ou du temps.

14. Système de retenue de passager selon la revendication 12 ou 13, dans lequel le dispositif à capteur présente au moins un capteur qui est disposé sur l'airbag dans une zone qui est tournée vers le passager lors du déclenchement de l'airbag.

15. Système de retenue de passager selon la revendication 14, dans lequel le capteur est un capteur de force disposé sur l'airbag.

16. Système de retenue de passager selon la revendication 15, **caractérisé en ce que** le capteur de force présente au moins deux structures d'électrodes qui sont installées à une certaine distance l'une de l'autre sur un matériau textile de support, une couche en un matériau semi-conducteur qui est appliquée dans une zone active du capteur en contact direct avec les structures d'électrodes et entre les structures d'électrodes, la couche en matériau semi-conducteur présentant une résistance interne qui peut varier en fonction d'une déformation de la couche.

17. Système de retenue de passager selon la revendication 16, **caractérisé en ce que** le matériau textile de support comprend le matériau de l'airbag, les structures d'électrodes étant installées directement sur l'airbag.
